# EUROPÄISCHE PATENTSCHRIFT

(11) **EP 0 498 016 B1**
(45) Veröffentlichungstag und Bekanntmachung des Hinweises auf die Patenterteilung: **26.04.1995**
(21) Anmeldenummer: 91101714.3
(22) Anmeldetag: 07.02.1991
(51) Int. Cl.: G21C 9/004

(54) **Verfahren und Anlage zur Druckentlastung der Sicherheitshülle eines Kernkraftwerks**
Method and installation for the pressure relief of a nuclear power plant containment vessel
Méthode et installation de détente de l'enceinte de sécurité d'une centrale nucléaire

(43) Veröffentlichungstag der Anmeldung: 12.08.1992
(73) Patentinhaber: SIEMENS AKTIENGESELLSCHAFT, 80333 München (DE)
(72) Erfinder: Eckardt, Bernd, Dipl.-Ing., W-6454 Bruchköbel (DE)

(56) Entgegenhaltungen:
- EP-A- 0 285 845
- EP-A- 0 290 028
- GB-A- 2 055 241
- US-A- 4 863 677

## Beschreibung

Die Erfindung betrifft ein Verfahren und eine Anlage zur Druckentlastung der Sicherheitshülle eines Kernkraftwerks über ein innerhalb der Sicherheitshülle angeordnetes, eine Waschflüssigkeit enthaltendes Filter.

Die Druckentlastung der Sicherheitshülle eines Kernkraftwerks kann erforderlich werden, wenn entgegen allen Erwartungen der Druck den hierfür vorgesehenen Auslegungswert der Sicherheitshülle zu überschreiten droht. Zum Abbau des Drucks im Sicherheitsbehälter eines Kernkraftwerks dient ein Verfahren und eine Vorrichtung gemäß der DE-OS 38 06 872, wonach innerhalb der Sicherheitshülle ein Naßwäscher als Teil eines Filters vorgesehen ist, durch den ein innerhalb des Sicherheitsbehälters entstandenes Gas-Dampf-Gemisch vor der Freisetzung in die Umgebung von giftigen und/oder radioaktiven Bestandteilen gesäubert wird.

Eine spezielle Ausführung für einen Naßwäscher ist in der DE-OS 38 15 850 beschrieben. Bei dieser Anordnung erfolgt die Vermischung des Gas-Dampf-Gemisches mit der Waschflüssigkeit innerhalb von Venturidüsen, so daß eine sehr innige Mischung und damit eine sehr gute Waschwirkung gewährleistet ist.

Das Gas-Dampf-Gemisch innerhalb der Sicherheitshülle besteht unabhängig von der Ursache seiner Entstehung beim Erreichen des Auslegungsdrucks der Sicherheitshülle zu etwa 70 % aus Wasserdampf sowie aus komprimierter Luft und anderen innerhalb der Sicherheitshülle gebildeten Gasen, zu denen mit an Sicherheit grenzender Wahrscheinlichkeit auch eine nicht vernachlässigbare Menge von reinem Wasserstoff gehört.

Bei bisher vorgeschlagenen Lösungen mit innerhalb des Sicherheitsbehälters untergebrachtem Naßwäscher ist dieser entweder isoliert und unbeheizt oder nicht isoliert und demzufolge ständig beheizt. Infolge davon kann die Temperatur der Waschflüssigkeit, z.B. Wasser, deutlich niedriger sein als die Temperatur des Gas-Dampf-Gemischs, so daß zumindest beim Anfahren der Anlage beim Durchtritt des Gas-Dampf-Gemischs durch die Waschflüssigkeit eine unerwünscht heftige Kondensation des Wasserdampfs auftreten kann. Schon diese Kondensation des Wasserdampfs ist nur mit besonderem Aufwand technisch beherrschbar. Ein weiterer Nachteil der Kondensation des Wasserdampfs in der Waschflüssigkeit besteht jedoch darin, daß dadurch der relative Anteil des reinen Wasserstoffgases in dem aus dem Naßwäscher abströmenden Gas-Dampf-Gemisch einen unerwünscht hohen Anteil erreichen kann. Bei ständig beheiztem Naßwäscher ergibt sich als zusätzlicher Nachteil, daß ständig ein erheblicher Teil der Waschflüssigkeit verdampft und ersetzt werden muß.

Der Erfindung liegt daher die Aufgabe zugrunde, ein Verfahren und eine Anlage zur Druckentlastung der Sicherheitshülle eines Kernkraftwerks mit einem innerhalb der Sicherheitshülle vorgesehenen Naßfilter zu schaffen, in dem auch während des Anfahrvorgangs allenfalls ein nicht relevanter Teil des im Filtergut enthaltenen Wasserdampfes kondensiert. Da als Waschflüssigkeit vorzugsweise Wasser eingesetzt wird, muß die Temperatur der Waschflüssigkeit annähernd gleich der Temperatur des Filterguts sein. Dabei soll jedoch andererseits im Dauerbetrieb möglichst wenig Waschflüssigkeit verdampfen.

Erfindungsgemäß wird diese Aufgabe dadurch gelöst, daß die Waschflüssigkeit vor der Inbetriebnahme des Filters über eine Wärmebrücke von einem die Sicherheitshülle füllenden Gas-Dampf-Gemisch mit verhältnismäßig großer Aufheizleistung beheizt wird und daß die Wärmebrücke im Betriebszustand des Filters nahezu wirkungslos wird oder sogar vollständig zusammenbricht, so daß lediglich eine für die Filterung nicht relevante Dauerheizleistung für die Waschflüssigkeit bestehen bleibt.

Vorteilhafte Ausgestaltungen des erfindungsgemäßen Verfahrens bestehen darin, daß die Dauerheizleistung kleiner als das 0,1-Fache der Aufheizleistung ist, daß die Waschflüssigkeit bei Beheizung mit der Aufheizleistung spätestens nach acht, vorzugsweise jedoch nach zwei, Stunden ihre Betriebstemperatur erreicht hat, die bei 100 bis 150° C liegt, bei einer direkten Druckentlastung eines Druckwasser führenden Kreislaufs jedoch bis 260° C steigt.

Eine weitere Maßnahme zur Ausgestaltung des erfindungsgemäßen Verfahrens besteht darin, daß die durch die Dauerheizleistung zugeführte Wärmemenge kleiner ist als die der Waschflüssigkeit durch Verdampfen entzogene Wärmemenge, so daß die Betriebstemperatur des Filters niedriger ist als die Eintrittstemperatur des Gas-Dampf-Gemischs.

Das erfindungsgemäße Verfahren ist sehr vorteilhaft, weil durch die Vermeidung von Kondensation in der Waschflüssigkeit ein sicheres Anfahren ohne nennenswerte Volumenänderungen im Filtergut gewährleistet ist und wobei außerdem eine kompakte Bauweise für das Filter und ein sehr geringer Waschflüssigkeitsverbrauch ermöglicht sind.

Zur Durchführung des Verfahrens dient erfindungsgemäß ein Filterbehälter in mindestens teilweise doppelwandiger Ausführung, wobei ein zwischen die Doppelwandigkeit herstellenden Wänden liegender Raum während der Aufheizzeit mindestens teilweise mit einer Wärmeleitflüssigkeit gefüllt ist und wobei mindestens die Hälfte der Wärmeleitflüssigkeit nach Erreichen der Betriebstemperatur des Filters verdampft. Dabei ist der Wärmeleitwiderstand doppelwandiger Abschnitte des Behälters ohne Füllung mit Wärmeleitflüssigkeit mindestens zehn mal größer als mit Füllung.

Nach zweckmäßigen Ausgestaltungen der erfindungsgemäßen Anlage ist vorgesehen, daß der Behälter einen doppelwandig ausgeführten, eine vertikale Achse umschließenden, vorzugsweise zylindrischen, aus zwei zueinander konzentrischen Wänden zusammengesetzten Mittelteil aufweist, der nach unten durch einen einwandigen gewölbten Boden und nach oben durch einen ebenfalls einwandigen, gewölbten Deckel fest verschlossen ist. Dadurch umfaßt der Behälter eine innere Kammer und eine im Querschnitt ringförmig sich über die ganze Höhe des doppelwandigen Mittelteils erstreckende zweite Kammer, die mit der inneren Kammer über dicht unter dem Deckel angeordnete Öffnungen verbunden ist.

Dieser Aufbau des Filterbehälters ermöglicht eine in weiten Grenzen schwankende Füllung der inneren Kammer mit Waschflüssigkeit und die Füllung der zweiten Kammer mindestens in ihrem unteren Teil mit Wärmeleitflüssigkeit, die Teil einer Wärmebrücke zwischen der Umgebung des Filterbehälters und dem Filterinhalt darstellt und wobei ein Verdampfen der Wärmeleitflüssigkeit innerhalb der zweiten Kammer möglich ist. Durch das Verschwinden der Wärmeleitflüssigkeit aus der zweiten Kammer wird die Wärmebrücke zwischen der Umgebung des Filterbehälters und dessen Inhalt unterbrochen, so daß die obengenannten Vorteile erreicht werden. Nach dem Verschwinden der Wärmeleitflüssigkeit aus der zweiten Kammer steht diese zur Aufnahme von aus dem Gas-Dampf-Gemisch herausgefiltertem radioaktiven Abfall zur Verfügung, so daß dieser in vorteilhafter Weise im Sicherheitsbehälter bleibt.

Ein Ausführungsbeispiel der Erfindung wird anhand einer Zeichnung näher erläutert.

Innerhalb einer Sicherheitshülle 1 eines Kernkraftwerks ist ein Filter 2 angeordnet. Das Filter 2 ist vorgesehen zur Filterung eines Gas-Dampf-Gemisches, das innerhalb des Sicherheitsbehälters 1 beim Auftreten eines schweren Störfalls entstehen kann. Bei einem derartigen Störfall ist mit dem Freisetzen von erheblichen Wärmemengen zu rechnen, so daß ein großer Teil des innerhalb der Sicherheitshülle 1 vorhandenen Wassers verdampft und der Druck innerhalb der Sicherheitshülle 1 ansteigt. Beim Erreichen des rechnerischen Auslegungsdrucks der Sicherheitshülle 1 wird dann zur Druckentlastung derselben Gas-Dampf-Gemisch durch das Filter 2 gefiltert nach außen abgeführt.

Das Filter besteht aus einem Behälter mit einem zylindrischen Mittelteil aus konzentrischen Wänden 4 und 5, deren untere Enden durch einen gewölbten Boden 8 miteinander verbunden sind. Die oberen Enden der Wände 4 und 5 sind durch einen ebenfalls gewölbten Deckel 9 miteinander verbunden und nach außen abgeschlossen. Die Wände 4 und 5 bilden einen ringförmigen Raum 6, der eine innere Kammer 10 umschließt. Die innere Kammer 10 ist über unmittelbar unterhalb des Deckels 9 liegende Öffnungen mit dem ringförmigen Raum 6 verbunden.

Innerhalb der inneren Kammer 10 sind an deren oberem Ende unmittelbar vor den Öffnungen in der Wand 5 Tropfenabscheider 13 befestigt. Innerhalb des ringförmigen Raums 6 sind in dessen oberer Hälfte Filtermatten 11 angeordnet, deren radial innenliegende Seite in nicht näher dargestellter Art und Weise mit den von den Tropfenabscheidern 13 abgedeckten Öffnungen in Verbindung steht und deren radial außenliegende Seite mit einer Ausleitungsöffnung 18 in Verbindung steht, aus der das gefilterte Gas-Dampf-Gemisch durch ein die Sicherheitshülle 1 durchdringendes Rohr 19 aus der Sicherheitshülle 1 hinausgeführt wird. Die radial außen liegende Wand 4 ist außerdem von einer Überdruckleitung 32 durchdrungen, durch die der ringförmige Raum 6 beim Auftreten eines unzulässig hohen Drucks über ein Überdruckventil 33 entlastet wird.

Zur Vermeidung von Konvektion über die ganze Höhe des ringförmigen Raums 6 ist unmittelbar unter den Filtermatten 11 eine gelochte und/oder geschlitzte Konvektionssperre 12 vorgesehen.

Die innere Kammer 10 ist vor der Inbetriebnahme des Filters 2 zu 30 bis 80 %, vorzugsweise etwa zur Hälfte, mit einer Waschflüssigkeit 3 gefüllt. Der ringförmige Raum 6 zwischen den Wänden 4 und 5 ist unterhalb der Konvektionssperre 12 annähernd vollständig mit Wärmeleitflüssigkeit 7 gefüllt. Sowohl als Waschflüssigkeit 3 als auch als Wärmeleitflüssigkeit 7 ist im Ausführungsbeispiel Wasser vorgesehen.

Die Zuleitung des Filterguts, also des Gas-Dampf-Gemisches in das Filter 2 aus dem Innenraum der Sicherheitshülle 1, erfolgt über einen horizontalen Abschnitt 15 zum oberen Ende eines vertikal, mittig in der inneren Kammer 10 angeordneten Rohr 14, dessen unteres Ende horizontal verlaufende, sternförmig angeordnete Speiserohre 16 von Kurzventuridüsen 17 trägt.

Normalerweise, insbesondere während des planmäßigen Betriebs des Kernkraftwerks, ist der horizontale Abschnitt 15 über eine in einer Leitung 21 liegende Rückschlagklappe 22 sowie eine Berstscheibe 23 gegen den Innenraum der Sicherheitshülle 1 abgesperrt. Das Innere des Filters 2 ist außerdem in nicht näher dargestellter Weise mit einem Primärkreis des Kernkraftwerks verbunden, wobei auch diese Verbindung im Normalbetrieb abgesperrt ist. Während des Normalbetriebs des Kernkraftwerks ist auch das von der Ausleitungsöffnung 18 ausgehende Rohr 19 verschlossen. Hierzu dienen Absperrarmaturen 25, die das Rohr 19 in Richtung auf eine Drossel 28 sowie eine weitere Berstscheibe 26 und einen Kamin 27 freigeben können. Parallel zur Drossel 28 sowie zu einer zwischen dieser und der Berstscheibe 26 liegenden weiteren Absperrarmatur 29 ist ein Meßfilter 30 vorgesehen.

Durch den Boden 8 ist eine Nachspeiseleitung 24 für Waschflüssigkeit 3 mit der inneren Kammer 10 verbunden. Die Nachspeiseleitung 24 durchsetzt die Sicherheitshülle 1 und ist an ihrem freien Ende durch Absperrarmaturen 31 im Normalbetrieb verschlossen.

Beim Auftreten eines schweren Störfalls innerhalb der Sicherheitshülle 1 wird, wie bereits oben ausgeführt, ein erheblicher Teil des als Kühlmittel innerhalb der Sicherheitshülle 1 vorhandenen Wassers verdampfen, so daß der Druck innerhalb der Sicherheitshülle 1, die beim Auftreten eines Störfalls sofort hermetisch nach außen gasdicht abgeschlossen wird, ansteigt. Parallel zur Verdampfung eines Teils des Wassers laufen eine Vielzahl weiterer Reaktionen, durch die ebenfalls Gase und/oder Dämpfe erzeugt und/oder freigesetzt werden. Durch all diese Vorgänge erreicht, im wesentlichen abhängig von der freigesetzten Wärmemenge, der innerhalb der Sicherheitshülle 1 herrschende Druck früher oder später möglicherweise den Auslegungsdruck der Sicherheitshülle 1.

Gleichzeitig mit dem Druck steigt jedoch auch die Temperatur innerhalb der Sicherheitshülle 1 an. Dadurch wird auch deren gesamtes Inventar, also auch das Filter 2 aufgeheizt. Die Temperatur des Inventars der Sicherheitshülle 1 erreicht bereits lange vor der Annäherung an den rechnerischen Auslegungsdruck derselben 100° C. Da das Innere des Filters 2 hermetisch nach außen abgeschlossen ist und ein Inertgaspolster über der Waschflüssigkeit vorgesehen ist, steigt der Druck innerhalb des Filtergehäuses und den angeschlossenen Leitungselementen ebenfalls an, so daß als Wärmeleitflüssigkeit 7 und als Waschflüssigkeit 3 vorgesehenes Wasser noch nicht siedet. Da zur Verbesserung des Wärmeübergangs von der Wand 4 in die Wärmeleitflüssigkeit 7 und von dieser in die Wand 5 an den Wänden 4 und 5 Wärmeübertragungsrippen 20 vorgesehen sind, ist der Wärmeeintrag in die Wärmeleitflüssigkeit 7 durch die Wand 4 besonders gut, so daß schnell die Sicherheitsbehältertemperatur von beispielsweise 150° C erreicht wird.

Beim Ansprechen der Berstscheibe 23 liegt demzufolge die Temperatur der Waschflüssigkeit 3 bei der dann innerhalb der Sicherheitshülle 1 erreichten Temperatur von beispielsweise 150° C. Das durch die Leitung 21, den horizontalen Abschnitt 15 und das Rohr 14 sowie die Speiserohre 16 zu den Kurzventuridüsen 17 strömende Gas-Dampf-Gemisch wird also, wenn überhaupt, nur unwesentlich wärmer sein als die Waschflüssigkeit 3. Demzufolge wird beim Vermischen des Gas-Dampf-Gemischs mit der Waschflüssigkeit 3 in den Kurzventuridüsen 17 nur ein unwesentlicher Teil des Wasserdampfs aus dem Gas-Dampf-Gemisch kondensieren, so daß das aus der Waschflüssigkeit 3 nach oben austretende und durch die Tropfenabscheider 13 sowie die Filtermatten 11 zur Ausleitungsöffnung 18 hin abströmende Gas-Dampf-Gemisch im wesentlichen die gleiche Zusammensetzung hat wie das durch die Leitung 21 in das Filter hineingeführte Gemisch.

Das durch die Kurzventuridüsen 17 in das Filter 2 einströmende Gas-Dampf-Gemisch erleidet dabei einen Druckabfall von 2000 bis 200 hPa, so daß unmittelbar nach dem Ansprechen der Berstscheibe 23 Waschflüssigkeit 3 und Wärmeleitflüssigkeit 7 verdampfen. Da die Wärmeleitflüssigkeit im Gegensatz zur Waschflüssigkeit nicht aufgefüllt wird, ist sie bald verdampft und dadurch die Wärmebrücke zwischen dem Inneren der Sicherheitshülle 1 und dem Inneren des Filters 2 unterbrochen. Die Temperatur der Waschflüssigkeit 3 liegt durch den Entzug der Verdampfungswärme ca. 10° bis 2° tiefer als die Temperatur des einströmenden Gas-Dampf-Gemischs.

Nach dem Ansprechen der Berstscheibe 23 herrscht im Filter 2 der lediglich um den vorgenannten Betrag abgesenkte Druck, der fast dem Druck im Inneren der Sicherheitshülle 1 entspricht, so daß nur ein verhältnismäßig kleiner Volumenstrom an Gas-Dampf-Gemisch gefiltert werden muß, wobei außerdem durch die Unterbringung von Filtermatten 11 in dem die innere Kammer 10 ringförmig umschließenden Raum 6 eine sehr kompakte raumsparende Bauweise für das Filter 2 ermöglicht ist.

Bei einem längeren Betrieb des Filters 2 wird sich zwar im unteren Teil des Raums 6 aus den Filtermatten 11 abtropfendes Filtergut sammeln und dadurch erneut eine Wärmebrücke zur Waschflüssigkeit 3 schaffen; dieser Vorgang erfolgt jedoch so langsam, daß dadurch keine Gefährdung oder wesentliche Beeinträchtigung der Filterung hervorgerufen wird. Jedenfalls ist auch im Dauerbetrieb des Filters nur mit verhältnismäßig geringen Verlusten an Waschflüssigkeit zu rechnen, weil nur die im Filtergut selbst enthaltene Wärmemenge durch das Filter 2 hindurchströmt. Solange jedoch der Partialdruck des Wasserdampfs in dem Gas-Dampf-Gemisch niedriger ist als der der Temperatur der Waschflüssigkeit entsprechende Siededruck, wird ein Teil derselben verdampfen. Dadurch wird der Waschflüssigkeit Wärme entzogen, also die Temperatur herabgesetzt, bis der Siededruck gleich dem Partialdruck ist.

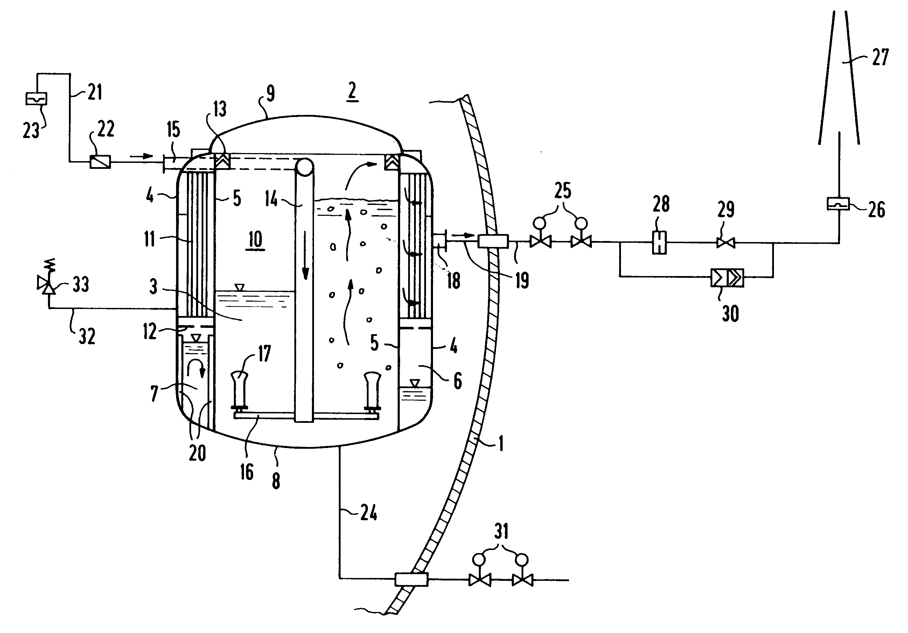

## Patentansprüche

1. Verfahren zur Druckentlastung der Sicherheitshülle (1) eines Kernkraftwerks über ein innerhalb der Sicherheitshülle (1) angeordnetes, eine Waschflüssigkeit (3) enthaltendes Filter (2),
**dadurch gekennzeichnet**,
- daß die Waschflüssigkeit (3) vor der Inbetriebnahme des Filters (2) über eine Wärmebrücke (4, 5, 7) von einem die Sicherheitshülle (1) füllenden Gas-Dampf-Gemisch mit Aufheizleistung beheizt wird und
- daß die Wärmebrücke (4, 5, 7) im Betriebszustand des Filters (2) nahezu wirkungslos wird, so daß lediglich eine für die Filterung nicht relevante Dauerheizleistung für die Waschflüssigkeit (3) bestehen bleibt.

2. Verfahren nach Anspruch 1,
**dadurch gekennzeichnet**, daß die Dauerheizleistung kleiner als das 0,1-fache der Aufheizleistung ist.

3. Verfahren nach Anspruch 1,
**dadurch gekennzeichnet**, daß die Waschflüssigkeit (3) bei Beheizung mit der Aufheizleistung spätestens nach acht, vorzugsweise nach zwei Stunden, ihre Betriebstemperatur erreicht hat.

4. Verfahren nach einem der Ansprüche 1 bis 3,
**dadurch gekennzeichnet**, daß die Betriebstemperatur bei 100° bis 150° C liegt, bei Druckentlastung direkt aus einem Primärkreis des Kernkraftwerks 260° C erreicht und als Waschflüssigkeit Wasser vorgesehen ist.

5. Verfahren nach einem der Ansprüche 1 bis 4,
**dadurch gekennzeichnet**, daß die durch die Dauerheizleistung zugeführte Wärmemenge kleiner ist als die der Waschflüssigkeit (3) durch Verdampfen entzogene Wärmemenge, so daß die Betriebstemperatur des Filters (2) niedriger ist als die Eintrittstemperatur des Gas-Dampf-Gemisches.

6. Anlage zur Durchführung des Verfahrens nach einem der Ansprüche 1 bis 5,
**dadurch gekennzeichnet**,
- daß ein Behälter für das Filter (2) mindestens teilweise doppelwandig ist,
- daß ein zwischen die Doppelwandigkeit herstellenden Wänden (4, 5) liegender Raum (6) während der Aufheizzeit mindestens teilweise mit einer Wärmeleitflüssigkeit (7) gefüllt ist und
- daß mindestens die Hälfte der Wärmeleitflüssigkeit (7) nach Erreichen der Betriebstemperatur verdampft.

7. Anlage nach Anspruch 6,
**dadurch gekennzeichnet,** daß der Wärmeleitwiderstand doppelwandiger Abschnitte des Behälters ohne Füllung mit Wärmeleitflüssigkeit (7) mindestens 10-mal größer ist als mit Füllung.

8. Anlage nach einem der Ansprüche 6 oder 7,
**dadurch gekennzeichnet**, daß der Behälter einen doppelwandig ausgeführten eine vertikale Achse umschliessenden, vorzugsweise zylindrischen, aus Wänden (4, 5) zusammengesetzten Mittelteil aufweist, der nach unten durch einen einwandigen gewölbten Boden (8) und nach oben durch einen ebenfalls gewölbten Deckel (9) fest verschlossen ist.

9. Anlage nach einem der Ansprüche 6 bis 8,
**dadurch gekennzeichnet**, daß der Behälter eine innere Kammer (10) und eine im Querschnitt ringförmige sich über die ganze Höhe des doppelwandigen Mittelteils erstreckende zweite Kammer (Raum 6) umfaßt, die mit der inneren Kammer (10) über dicht unter dem Deckel (9) angeordnete Öffnungen verbunden ist.

10. Anlage nach einem der Ansprüche 6 bis 9,
**dadurch gekennzeichnet**, daß die innere Kammer (10) zu 30 bis 80%, vorzugsweise zu etwa 50%, mit Waschflüssigkeit (3) und die zweite Kammer (Raum 6) in ihrem unteren Teil mit Wärmeleitflüssigkeit (7) und mindestens in ihrem oberen Teil mit Filtermatten (11) gefüllt ist.

11. Anlage nach einem der Ansprüche 6 bis 10,
**dadurch gekennzeichnet**, daß die zweite Kammer im Bereich der die Wärmeleitflüssigkeit (7) umfassenden Wandteile mindestens teilweise eine durch Wärmeübertragungsrippen (20) vergrößerte Oberfläche aufweist.

12. Anlage nach einem der Ansprüche 6 bis 11,
**dadurch gekennzeichnet**, daß Wasser sowohl als Waschflüssigkeit (3) als auch als Wärmeleitflüssigkeit (7) dient.

13. Anlage nach einem der Ansprüche 6 bis 12,
**dadurch gekennzeichnet**, daß in der zweiten Kammer (Raum 6) oberhalb der Wärmeleitflüssigkeit (7) eine Konvektionssperre (12) in Form einer gelochten und/oder geschlitzten horizontalen Zwischenwand vorgesehen ist.

14. Anlage nach einem der Ansprüche 6 bis 13,
**dadurch gekennzeichnet**, daß im oberen Teil der inneren Kammer (10) vor den zur zweiten Kammer (Raum 6) führenden Öffnungen Tropfenabscheider (13) angeordnet sind.

15. Anlage nach einem der Ansprüche 6 bis 14,
**dadurch gekennzeichnet,** daß die Zuführung des zu filternden Gas-Dampf-Gemisches durch ein vertikales, mittig in der inneren Kammer (10) angeordnetes Rohr (14) erfolgt, dessen oberes Ende über einen horizontal verlaufenden Abschnitt (15) mit dem Inneren der Sicherheitshülle (1) verbindbar ist und dessen unteres Ende in horizontale sternförmig angeordnete Speiserohre (16) von dicht über dem Boden (8) stehenden Kurzventuridüsen (17) mündet.

16. Anlage nach einem der Ansprüche 6 bis 15,
**dadurch gekennzeichnet,** daß die Ausleitung des gefilterten Gas-Dampf-Gemisches aus der zweiten Kammer (Raum 6) durch deren äußere Wand (4) etwa in halber Höhe der Filtermatten (11) erfolgt, wobei eine Ausleitungsöffnung (18) mit einem die Sicherheitshülle (1) durchsetzenden Rohr (19) verbunden ist.

17. Anlage nach einem der Ansprüche 6 bis 16,
**dadurch gekennzeichnet**, daß das Innere des Filters (2) über eine im Normalbetrieb durch ein Überdurckventil (33) verschlossene Überdruckleitung (32) mit einem Primärkreis des Kernkraftwerks verbunden ist.

18. Anlage nach einem der Ansprüche 6 bis 17,
**dadurch gekennzeichnet**, daß das Innere des Filters (2) über eine im Normalbetrieb durch ein Überdruckventil (33) verschlossene Überdruckleitung (32) mit dem Innenraum der Sicherheitshülle (1) verbunden ist.

## Claims

1. Method for the pressure relief of the containment (1) of a nuclear power plant via a filter (2) which is arranged within the containment (1) and which contains a washing liquid (3),
characterised in that
- prior to the initial operation of the filter (2) the washing liquid (3) is heated via a thermal bridge (4, 5, 7) by a gas-vapour mixture with heating power which fills the containment (1) and
- the thermal bridge (4, 5, 7) becomes virtually ineffective in the operating state of the filter (2), so that merely a continuous heating power for the washing liquid (3) remains which is not relevant to the filtration.

2. Method according to Claim 1,
characterised in that the continuous heating power is less than one tenth of the heating power.

3. Method according to Claim 1,
characterised in that in the case of heat being applied with the heating power the washing liquid (3) has attained its operating temperature after at most eight hours, preferably after two hours.

4. Method according to one of Claims 1 to 3,
characterised in that the operating temperature lies between 100 and 150 °C, attains 260 °C in the case of pressure relief directly from a primary circuit of the nuclear power plant, and water is provided as washing liquid.

5. Method according to one of Claims 1 to 4,
characterised in that the amount of heat supplied by the continuous heating power is less than the amount of heat removed from the washing liquid (3) by evaporation, so that the operating temperature of the filter (2) is lower than the inlet temperature of the gas-vapour mixture.

6. Installation for implementing the method according to one of Claims 1 to 5,
characterised in that
- a container for the filter (2) is at least partly double-walled,
- a space (6) located between the walls (4, 5) forming the double-walled arrangement is filled during the heating time at least partially with a heat-conducting liquid (7) and
- at least half of the heat-conducting liquid (7) evaporates after the operating temperature has been attained.

7. Installation according to Claim 6,
characterised in that the heat-conducting resistance of double-walled sections of the container when they are not filled with heat-conducting liquid (7) is at least 10 times higher than it is when they are filled with said heat-conducting liquid.

8. Installation according to one of Claims 6 or 7,
characterised in that the container exhibits a preferably cylindrical double-walled central part composed of walls (4, 5) and surrounding a vertical axis, said central part being firmly sealed towards the bottom by a single-walled domed base (8) and towards the top by a likewise domed cover (9).

9. Installation according to one of Claims 6 to 8,
characterised in that the container comprises an inner chamber (10) and a second chamber (space 6) which is annular in cross-section and which extends over the entire height of the double-walled central part, said second chamber being connected to the inner chamber (10) via openings arranged just below the cover (9).

10. Installation according to one of Claims 6 to 9,
characterised in that the inner chamber (10) is filled to an extent amounting to 30 to 80%, preferably to about 50%, with washing liquid (3) and the second chamber (space 6) is filled in its lower part with heat-conducting liquid (7) and at least in its upper part with filter mats (11).

11. Installation according to one of Claims 6 to 10,
characterised in that the second chamber in the region of the wall parts encompassing the heat-conducting liquid (7) exhibits at least partly a surface that is augmented by heat-transfer fins (20).

12. Installation according to one of Claims 6 to 11,
characterised in that water serves both as washing liquid (3) and as heat-conducting liquid (7).

13. Installation according to one of Claims 6 to 12,
characterised in that a convection barrier (12) in the form of a perforated and/or slotted horizontal partition is provided in the second chamber (space 6) above the heat-conducting liquid (7).

14. Installation according to one of Claims 6 to 13,
characterised in that drop separators (13) are arranged in the upper part of the inner chamber (10) in front of the openings leading to the second chamber (space 6).

15. Installation according to one of Claims 6 to 14,
characterised in that the gas-vapour mixture to be filtered is supplied through a vertical pipe (14) arranged centrally in the inner chamber (10), the upper end of said pipe being capable of being connected to the interior of the containment (1) via a horizontal section (15) and the lower end of said pipe leading into horizontal feed pipes (16), arranged in the form of a star, of short venturi nozzles (17) located just above the base (8).

16. Installation according to one of Claims 6 to 15, characterised in that the filtered gas-vapour mixture is led out of the second chamber (space 6) through the outer wall (4) thereof at a level of roughly half the height of the filter mats (11), whereby an outlet opening (18) is connected to a pipe (19) which penetrates the containment (1).

17. Installation according to one of Claims 6 to 16, characterised in that the interior of the filter (2) is connected to a primary circuit of the nuclear power plant via an excess-pressure line (32) which in normal operation is sealed by an excess-pressure valve (33).

18. Installation according to one of Claims 6 to 17, characterised in that the interior of the filter (2) is connected to the interior space of the containment (1) via an excess-pressure line (32) which in normal operation is sealed by an excess-pressure valve (33).

## Revendications

1. Procédé de détente en pression de l'enceinte de sécurité d'une centrale nucléaire par l'intermédiaire d'un filtre (2) qui est disposé à l'intérieur de l'enceinte de sécurité (1) et qui contient un liquide de lavage (3), caractérisé en ce qu'il consiste
- avant la mise en service du filtre (2) à chauffer à une puissance de mise en température, le liquide de lavage (3) par l'intermédiaire d'un pont thermique (4,5), à l'aide d'un mélange gaz-vapeur remplissant l'enceinte de sécurité (1), et
- lorsque le filtre (2) fonctionne, à rendre presque inactif le pont thermique (4,5,7), de sorte que seule subsiste une puissance de chauffage permanente pour le liquide de lavage (3), qui n'est pas significative pour la filtration.

2. Procédé suivant la revendication 1, caractérisé en ce que la puissance de chauffage permanente est inférieure à 0,1 fois la puissance de mise en température.

3. Procédé suivant la revendication 1, caractérisé en ce que lors du chauffage à la puissance de mise en température, le liquide de lavage (3) atteint sa température de fonctionnement au plus tard huit heures après et de préférence deux heures après.

4. Procédé suivant l'une des revendications 1 à 3, caractérisé en ce que la température de fonctionnement est comprise entre 100°C et 150°C, et atteint 260°C, lors de la détente en pression, directement à partir d'un circuit primaire de la centrale nucléaire, et que de l'eau est prévue comme liquide de lavage.

5. Procédé suivant l'une des revendications 1 à 4, caractérisé en ce que la quantité de chaleur fournie par la puissance de chauffage permanente est inférieure à la quantité de chaleur prélevée du liquide de lavage (3) par évaporation, de sorte que la température de fonctionnement du filtre (2) est inférieure à la température d'entrée du mélange gaz-vapeur.

6. Installation de mise en oeuvre du procédé suivant l'une des revendications 1 à 5, caractérisée en ce que
- qu'une cuve pour le filtre (2) est au moins partiellement à paroi double,
- qu'un espace (6), entre les parois (4,5) formant les parois doubles, est rempli au moins partiellement d'un liquide thermoconducteur (7), pendant la durée de mise en température, et
- qu'au moins la moitié du liquide thermoconducteur (7) s'évapore une fois atteinte la température de fonctionnement.

7. Installation selon la revendication 6, caractérisée en ce que la résistance thermoconductrice de sections à paroi double de la cuve non remplie d'un liquide thermoconducteur (7) est au moins 10 fois supérieure à ce qu'elle est si la cuve est remplie.

8. Installation suivant l'une des revendications 6 ou 7, caractérisée en ce que la cuve a une partie centrale qui est réalisée à paroi double, entoure un axe vertical, est de préférence cylindrique, est formée par la réunion de parois (4,5) et est fermée de façon fixe, vers le bas, par un fond bombé (8) à une seule paroi et, vers le haut, par un couvercle (9) également bombé.

9. Installation suivant l'une des revendications 6 à 8, caractérisée en ce que la cuve comprend une chambre intérieure (10) et une second chambre (espace 6), de section transversale annulaire, qui s'étend sur toute la hauteur de la partie centrale à paroi double et qui communique avec la chambre intérieure (10) par l'intermédiaire d'ouvertures prévues sous le couvercle (9).

10. Installation suivant l'une des revendications 6 à 9, caractérisée en ce que la chambre intérieure (10) est remplie jusqu'à 30 à 80 %, de préférence jusqu'à environ 50 %, du liquide de lavage (3), et la seconde chambre (espace 6) est remplie, dans sa partie inférieure, du liquide thermoconducteur (7) et, au moins dans sa partie supérieure, de voiles filtrants (11).

11. Installation suivant l'une des revendications 6 à 10, caractérisée en ce que dans la zone des éléments de paroi tournant le liquide thermoconducteur (7), la seconde chambre possède, au moins en partie, une surface augmentée par la présence de nervures de transmission de chaleur (20).

12. Installation suivant l'une des revendications 6 à 11, caractérisée en ce que l'eau sert aussi bien de liquide de lavage (3) que de liquide thermoconducteur (7).

13. Installation suivant l'une des revendications 6 à 12, caractérisée en ce qu'un dispositif de blocage de convection (12), réalisé sous la forme d'une paroi intercalaire horizontale perforée et/ou fendue, est prévu dans la seconde chambre (espace 6) au-dessus du liquide thermoconducteur (7).

14. Installation suivant l'une des revendications 6 à 13, caractérisée en ce que des séparateurs de gouttes (13) sont disposés dans la partie supérieure de la chambre (10) en avant des ouvertures débouchant dans la seconde chambre (espace 6).

15. Installation suivant l'une des revendications 6 à 14, caractérisée en ce que l'envoi du mélange gaz-vapeur devant être filtré s'effectue par l'intermédiaire d'un tube vertical (14), qui est disposé au milieu de la chambre intérieure (10) et dont l'extrémité supérieure peut communiquer, par l'intermédiaire d'un tronçon horizontal (15), avec l'intérieur de l'enceinte de sécurité (1) et dont l'extrémité inférieure débouche, dans des tubes d'alimentation horizontaux en forme d'étoile (16) de courtes buses à venturi (17), qui sont disposées juste au-dessus du fond (8).

16. Installation suivant l'une des revendications 6 à 15, caractérisée en ce que la sortie du mélange gaz-vapeur filtré de la seconde chambre (espace 6) s'effectue à travers sa paroi extérieure (4), approximativement à mi-hauteur des voiles filtrants (11), une ouverture de sortie (18) communiquant avec un tube (19) qui traverse l'enceinte de sécurité (1).

17. Installation suivant l'une des revendications 6 à 16, caractérisée en ce que l'intérieur du filtre (2) est relié à un circuit primaire de la centrale nucléaire, par l'intermédiaire d'une canalisation de surpression (32) qui, pendant le fonctionnement normal, est fermée par une soupape de surpression (33).

18. Installation suivant l'une des revendications 6 à 17, caractérisée en ce que l'intérieur du filtre (2) communique avec l'intérieur de l'enceinte de sécurité (1), par l'intermédiaire d'une canalisation de surpression (32), qui pendant le fonctionnement normal, est fermée par une soupape de surpression (33).
